# EUROPÄISCHE PATENTANMELDUNG

(11) **EP 0 744 429 A2**
(43) Veröffentlichungstag der Anmeldung: **27.11.1996**
(21) Anmeldenummer: 96107652.8
(22) Anmeldetag: 14.05.1996
(51) Int. Cl.: C08G 59/62, C09D 163/00, C09D 161/14

(54) **Carboxyl-funktionelle Alkylidenpolyphenole enthaltende Einbrennlacke auf Epoxidbasis**

(30) Priorität: 22.05.1995 DE 19518767
(71) Anmelder: Vianova Resins GmbH, 55252 Mainz-Kastel (DE)
(72) Erfinder: Burkhart, Thomas, Dr., 55124 Mainz (DE); Hesse, Wolfgang, Dr., 26655 Westerstede (DE); Oberressl, Paul, 65185 Wiesbaden (DE)

(57) **Zusammenfassung**

Einbrennlacke, enthaltend Epoxidharze sowie carboxyl-funktionelle Alkylidenpolyphenole in einer solchen Menge, daß die Carboxylgruppen im Vergleich zu den Epoxidgruppen der Epoxidharze mindestens in äquimolarer Menge vorliegen, eignen sich zum Beschichten der Innenseite von metallischen Lebensmittelbehältern und ergeben eingebrannte Emballagen-Lackfilme, die im wesentlichen frei von Epoxidgruppen tragenden migrationsfähigen Bestandteilen sind.

## Beschreibung

Die Erfindung betrifft Einbrennlacke auf der Basis von Epoxidharz und carboxylfunktionellem Alkylidenpolyphenol, die nach Aushärtung frei von migrationsfähigen Epoxidgruppen tragenden Bestandteilen sind, Verfahren zu deren Herstellung sowie deren Verwendung zum Beschichten von Lebensmittelbehältern.

Es ist bekannt, daß Phenolharze in der Chemikalienresistenz, in der Wasser- und Lösemittelbeständigkeit, in der Korrosionsbeständigkeit, in Farbgebung, und im Glanz von anderen Kunstharzen kaum zu übertreffen sind (Ullmann's Encyclopedia of Industrial Chemistry, Paints and Coatings, Vol. A18, (1991) 418). Speziell auf dem Gebiet der Innenschutzlacke für die Lackierung von Metallverpackungen aus Weißblech, Aluminium, Stahlblech und verchromtem Stahlblech haben sich hitzehärtbare Phenolharze in Kombination mit elastifizierenden Harzen, insbesondere Epoxidharzen, hervorragend bewährt.

Innenschutzlackierungen sind dünne Isolierschichten zwischen Metallverpackung und Füllgut. Sie haben die Aufgabe, die Verpackung vor Korrosion durch das Füllgut zu schützen und umgekehrt das Füllgut gegen die Einwirkung von Metallionen und der damit verbundenen Geschmacksbeeinträchtigung, zu bewahren. Eine möglichst porenfreie Filmbildung, eine ausreichende Härte und Kratzfestigkeit sowie Haftfestigkeit und Sterilisationsbeständigkeit sind weitere wichtige Eigenschaften, die diese Innenschutzlackierungen haben müssen. Darüber hinaus muß das in Kombination mit dem Epoxidharz zu verwendende Phenolharz in der Lage sein, mit den Epoxidgruppen so abzureagieren, daß im ausgehärteten Lackfilm und im Füllgut keine Epoxidgruppen tragende niedermolekularen Bestandteile mehr nachzuweisen sind.

Es ist bekannt, Phenolresole durch Umsetzung von phenolischen Verbindungen mit Aldehyden herzustellen (Modern Surface Coatings, P. Nylén, E. Sunderland, J. Wiley & Sons, London 1965, Seiten 178-189). Diese Produkte haben jedoch den Nachteil, daß sie nicht in der Lage sind, in Kombination mit dem Epoxidharz mit dessen Epoxidgruppen vollständig abzureagieren, so daß immer noch freie Epoxidgruppen bzw. Monomere des eingesetzten Epoxidharzes nachzuweisen sind.

Ferner ist bekannt, daß Phenolharze, die mit Aminen chemisch modifiziert wurden, über Polyadditionsreaktionen der Aminogruppe mit der Epoxidgruppe abreagieren, so daß keine freien Epoxidfunktionen mehr nachzuweisen sind (The Chemistry of Phenolic Resins, J. Wiley & Sons, New York 1956). Die nach dieser Methode hergestellten aminmodifizierten Phenolresole liefern jedoch in Kombination mit dem jeweils verwendetem Epoxidharz Lackfilme, die aufgrund des kationischen Charakters nicht mehr sterilisationsfest sind.

Weiterhin ist die Umsetzung von Acrylaten, insbesondere Polyhydroxyacrylaten, mit Epoxidharzen bekannt (Farbe und Lack 86 (1980) 706 und CHEMTECH 11 (1981) 681). Mit solchen Systemen ausgehärtete Lackfilme lassen sich aber nicht die Goldtöne und Glanzeigenschaften erreichen, wie sie eben bei der Verwendung von Phenolharzen resultieren. Des weiteren sind die Fließeigenschaften der Naßfilme der Epoxid/Acrylat-Kombinationen schlechter einzustellen als die der Epoxid/Phenolharz-Kombinationen.

Auch die Kombinationen anderer Kunstharze mit Epoxiden können nicht alle Forderungen, des für Emballagen-Innenschutzlacke aufgestellten Anforderungsprofils erfüllen (Ullmanns Encyclopedia of Industrial Chemistry, Vol. A18, Paints and Coating, 359).

Die Aufgabe der vorliegenden Erfindung bestand darin, einen Einbrennlack auf Basis von Epoxidharz bereitzustellen, der im Naßfilm gute Fließeigenschaften aufweist, nach dem Aushärten keine migrationsfähigen Epoxidgruppen enthält, sterilisationsfest ist und Lackfilme mit hohem Glanz ergibt.

Diese Aufgabe wird gelöst, wenn als Härterkomponente für Einbrennlacke auf Basis von Epoxidharz carboxyl-funktionelle Alkylidenpolyphenole in ausreichender Menge verwendet werden.

Gegenstand der Erfindung sind also Einbrennlacke, enthaltend Epoxidharze sowie carboxyl-funktionelle Alkylidenpolyphenole in einer solchen Menge, daß die Carboxylgruppen im Vergleich zu den Epoxidgruppen der Epoxidharze zumindest in äquimolarer Menge, vorzugsweise im Überschuß, vorliegen.

Als Epoxidharze können sämtliche Epoxidharze verwendet werden, die mehr als eine Epoxidgruppe pro Molekül enthalten. Bei den 1,2-Epoxidverbindungen handelt es sich um Polyepoxide mit im Mittel mindestens zwei Epoxidgruppen pro Molekül. Diese Epoxidverbindungen können dabei sowohl gesättigt als auch ungesättigt sowie aliphatisch, cycloaliphatisch, aromatisch und/oder heterocyclisch sein. Sie können weiterhin solche Substituenten und/oder funktionelle Gruppen enthalten, die unter den Mischungs- oder Reaktionsbedingungen keine störenden Nebenreaktionen verursachen, beispielsweise Alkyl- oder Arylsubstituenten, Ethergruppierungen und ähnliche. Vorzugsweise handelt es sich bei diesen Epoxidverbindungen um Polyglycidylether auf Basis von mehrwertigen, vorzugsweise zweiwertigen Alkoholen, Phenolen, Hydrierungsprodukten dieser Phenole und/oder von Novolaken (Umsetzungsprodukte von ein- oder mehrwertigen Phenolen mit Aldehyden, insbesondere Formaldehyd in Gegenwart saurer Katalysatoren). Die Epoxidäquivalentgewichte dieser Epoxidverbindungen liegen vorzugsweise zwischen 100 und 2000, insbesondere zwischen 150 und 1500. Als in den Epoxidharzen eingebaute mehrwertige Phenole seien beispielsweise genannt Resorcin, Hydrochinon, 2,2-Bis-(4-hydroxyphenyl)-propan (Bisphenol A), Isomerengemische des Dihydroxydiphenylmethans (Bisphenol F), Tetrabrombisphenol A, 4,4'-Dihydroxydiphenylcyclohexan, 4,4'-Dihydroxy-3,3'-dimethyldiphenylpropan, 4,4'-Dihydroxydiphenyl, 4,4'-Dihydroxybenzophenon, Bis-(4-hydroxyphenyl)-1,1-ethan, 2,2-Bis[4-(2-hydroxypropoxy)phenyl]-propan, Bis-(4-hydroxyphenyl)-1,1-isobutan,Bis-(4-hydroxy-tert.-butylphenyl)-2,2-propan,Bis-(2-hydroxynaphthyl)-methan, 1,5-Dihydroxynaphthalin, Tris-(4-hydroxyphenyl)methan, Bis-(4-hydroxyphenyl-)ether, Bis-(4-hydroxyphenyl)-sulfon u. a. sowie die Halogenierungs- und Hydrierungsprodukte der vorstehend genannten Verbindungen. Bisphenol A ist hierbei besonders bevorzugt.

Als Beispiele für in den Epoxidverbindungen eingebaute mehrwertige Alkohole seien genannt Ethylenglykol, Diethylenglykol, Triethylenglykol, Polyethylenglykole vorzugsweise mit 1 bis 35 Ethylenoxy-Einheiten, 1,2-Propylenglykol, Polypropylenglykole vorzugsweise mit 1 bis 15 Propylenoxyeinheiten, 1,3-Propylenglykol, 1,4-Butandiol, 1,5-Pentandiol, 1,6-Hexandiol, 1,2,6-Hexantriol, Glycerin, Neopentylglykol, 1,4-Dimethylolcyclohexan, Trimethylolethan, Trimethylolpropan, sowie ethoxylierte und propoxylierte Bisphenole, beispielsweise propoxyliertes Bisphenol A. Polypropylenglykole insbesondere mit 8 - 10 Propylenoxy-Einheiten sind hierbei besonders bevorzugt.

Es können als Epoxidharze auch Polyglycidylester von Polycarbonsäuren verwendet werden, die man durch die Umsetzung von Epichlorhydrin oder ähnlichen Epoxyverbindungen mit einer aliphatischen, cycloaliphatischen oder aromatischen Polycarbonsäure, wie Oxalsäure, Bernsteinsäure, Adipinsäure, Glutarsäure, Phthalsäure, Terephthalsäure, Hexahydrophthalsäure, 2,6-Naphthalindicarbonsäure und dimerisierte Linolensäure, erhält. Vorzugsweise geeignet sind Adipinsäurediglycidylester, Phthalsäurediglycidylester und Hexahydrophthalsäurediglycidylester.

Eine ausführliche Aufzählung geeigneter Epoxidverbindungen findet sich in dem Handbuch "Epoxidverbindungen und Epoxidharze" von A. M. Paquin, Springer Verlag, Berlin 1958, Kapitel IV und in Lee, Neville, "Handbook of Epoxy Resins", Mc Graw-Hill Book Co., 1967, Chapter 2. Die genannten Epoxidverbindungen können einzeln oder im Gemisch eingesetzt werden.

Unter carboxyl-funktionellen Alkylidenpolyphenolen sind erfindungsgemäß vorzugsweise Verbindungen zu verstehen, die aus der Umsetzung von Alkylidenpolyphenolen mit olefinisch-ungesättigten Dicarbonsäuren oder mit Halogenalkansäuren resultieren.

Als Alkylidenpolyphenole können alle Polyphenole eingesetzt werden, deren Grundgerüst aus phenolischen Körpern und Oxoverbindungen hergestellt wurde. Beispielsweise sind das Novolake, die aus Phenol und Formaldehyd in Gegenwart von Säuren kondensiert werden. Niedrigmolekulare phenolische Verbindungen wie Diphenylolmethan oder 2,2-Diphenylolpropan können auch verwendet werden. Die zur Herstellung der Novolake verwendeten Phenole können vollständig oder partiell alkyliert sein. Novolake aus p- oder o-Alkyl- bzw. Arylphenolen und Formaldehyd lassen sich ebenso heranziehen wie alkylierte Novolake, die zum Beispiel durch nachträgliche Umsetzung von nichtsubstituierten Novolaken mit ungesättigten aromatischen Kohlenwasserstoffen hergestellt worden sind. Es können auch solche carboxylierten Novolake verwendet werden, die ungesättigte aliphatische Gruppen enthalten.

Als Halogenalkansäure wird vorzugsweise Chloressigsäure verwendet. Als olefinisch ungesättigte Säurekomponenten werden beispielsweise Fumarsäure und insbesondere Maleinsäure bzw. deren Anhydrid eingesetzt.

Besonders bevorzugt werden solche carboxylierten Novolake verwendet, bei denen das Verhältnis des Alkylidenpolyphenols zum Gewicht der Carbonsäurekomponenten, insbesondere olefinisch-ungesättigten Dicarbonsäure bzw. deren Anhydrid, (100-x) : x mit x ≦ 40, insbesondere mit x = 10 bis 20, beträgt.

Die Herstellung der carboxylierten Novolake läßt sich sowohl in der Schmelze des Alkylidenpolyphenols und der olefinisch-ungesättigten Dicarbonsäure bzw. deren Anhydrid, im allgemeinen zwischen 160 und 230, vorzugsweise zwischen 170 und 190 °C durchführen, als auch durch gemeinsame Kondensation, der zur Herstellung des carboxylierten Alkylidenpolyphenols verwendeten Phenole und Formaldehyde mit den olefinisch-ungesättigten Dicarbonsäuren bzw. deren Anhydride. Die Bestimmung des Endpunktes kann erfolgen, indem die Viskosität, der Schmelzpunkt oder der Anteil an nicht flüchtigen Bestandteilen (Rückstand), das heißt des Quotienten aus Einwaage und Auswaage in Prozent, zum Beispiel bei 170 °C auf übliche Weise gemessen wird.

Die erfindungsgemäßen Einbrennlacke können zusätzlich weitere übliche Zusatzstoffe, beispielsweise Lösemittel, Pigmente, Füllstoffe, enthalten.

Gegenstand der Erfindung ist auch ein Verfahren zur Herstellung der carboxylfunktionellen Alkylidenpolyphenole enthaltenden Einbrennlacke auf Epoxidharz-Basis. Zunächst werden die carboxylierten Alkylidenpolyphenole mit den jeweils verwendeten Epoxidharzen so vermischt, daß Carboxylgruppen im Vergleich zu Epoxidgruppen vorzugsweise im Überschuß vorliegen. Das Gewichtsverhältnis von Epoxidharz und carboxyl-funktionellem Phenolharz liegt vorzugsweise zwischen 9 : 1 und 1 : 9, insbesondere zwischen 8,5 : 1,5 und 2,0 : 8,0.

Die erfindungsgemäßen Einbrennlacke können zusätzlich zu den carboxylierten Alkylidenpolyphenolen und den jeweils verwendeten Epoxidharzen auch Naturharzsäuren, insbesondere Kolophonium, zugesetzt werden. Die Naturharzsäuren können auch zuvor beispielsweise durch Mischpolykondensation in den Novolak eingebaut werden. Vorzugsweise werden dabei ®Albertole (Naturharzmodifizierte Phenolharze, Hoechst AG) eingesetzt. Dieser Mischung können weitere in Einbrennlacken übliche Zusatzstoffe zugesetzt werden. Anschließend wird das erhaltene Gemisch vorzugsweise mit einem Säurekatalysator, insbesondere Phosphorsäure versetzt.

Ein Gegenstand der vorliegenden Erfindung ist auch die Verwendung der Einbrennlacke zur Beschichtung von Lebensmittelbehältern, insbesondere der Innenseiten von Metallbehältern. Dazu werden die erfindungsgemäßen Einbrennlacke im Falle der Beschichtung von Blechtafeln und Metallbändern (Coils) im Walzlackierverfahren bzw. bei der Beschichtung von Tuben durch Spritzlackierung aufgetragen und bei Temperaturen vorzugsweise zwischen 190 und 210 °C und einer Einbrenndauer von vorzugsweise 10 bis 15 min ausgehärtet.

Ein weiterer Gegenstand der vorliegenden Erfindung sind eingebrannte, unter Verwendung der erfindungsgemäßen Einbrennlacke erhaltene Emballagen-Lackfilme, die im wesentlichen frei von Epoxidgruppen tragenden migrationsfähigen Bestandteilen sind. Die Schichtdicken der elastischen Emballagen-Lackfilme liegen vorzugsweise zwischen 4 und 8 µm (Trockenfilm). FT-IR-spektroskopische Untersuchungen ergeben den Nachweis, daß die eingebrannten Lackfilme nahezu frei von Epoxidgruppen sind.

Die in den folgenden Beispielen verwendeten Teile und Prozente beziehen sich auf das Gewicht, soweit nicht anders vermerkt.

### Beispiel 1

### 1.1 Herstellung eines Phenol-Formaldehyd-Novolaks

Die Herstellung des Novolaks erfolgt in einem 4-Hals-Glaskolben, der mit thermostatisierter Heizung, Rührvorrichtung, Thermometer, Zulaufvorrichtung, Rückflußkühler und Wasserabscheider versehen ist. Der Wasserabscheider hat ein höhenverstellbares Steigrohr, das eine kontinuierliche Abtrennung des Wasser ermöglicht.

Es werden 940 Teile Phenol, 40 Teile Xylol und 40 Volumenteile 0,5 n-Schwefelsäure vorgelegt und der Wasserabscheider mit 86 Teilen Xylol gefüllt. Der Ansatz wird unter Rühren auf 125 °C gebracht, und bei dieser Temperatur werden, über 3 Stunden gleichmäßig verteilt, 616 Teile einer wäßrigen 37 %igen Formaldehyd-Lösung zugetropft. Fünf Minuten nach Beendigung des Formaldehyd-Zulaufes werden 20 Volumenteile 0,5 n-Natronlauge zugegeben, und bis zu einer Sumpftemperatur von 170 °C wird das entstehende Wasser abgetrennt. Aus dem Reaktionsgemisch werden dann bei ansteigender Temperatur die flüchtigen Anteile abdestilliert. Nach Erreichen von 220 °C wird ein Vakuum von 60 mbar angelegt und bei dieser Temperatur 1 Stunde unter Vakuum gehalten. Im Kolben verbleiben 913 Teile eines Phenol-Formaldehyd-Novolaks, der noch 0,7 % nicht umgesetztes Phenol enthält. Der Erweichungspunkt liegt bei 92 °C und die Viskosität beträgt 2050 mPa·s (23 °C, 50%ig in Methoxypropanol).

### 1.2 Umsetzung des Novolaks aus Beispiel 1.1 mit Maleinsäureanhydrid

Zu dem im Kolben verbliebenen 913 Teilen des aus Beispiel 1.1 gewonnenen Novolaks werden 228 Teile Maleinsäureanhydrid gegeben. Die Temperatur wird auf 180 °C eingestellt und der Ansatz 5 Stunden bei 180 °C gerührt. Dabei steigt der nach DIN 53 216 (170 °C / 2 Stunden) gemessene Rückstand von 82,3 % auf 98,3 % an. Nach einer Reaktionszeit von 5 Stunden werden zum Ansatz unter gleichzeitigem Abkühlen 1180 Teile Butylglykol zugegeben. Es fallen 2295 Teile einer Kunstharzlösung an, die bei einem Rückstand von 51 % (2 Stunden / 170 °C) eine Viskosität von 4200 mPa·s (23 °C) aufweist. Die Säurezahl der erhaltenen Lösung beträgt 72.

### 1.3 Herstellung eines Einbrennlackes

60 Teile eines Epoxidharzes auf Basis von Diphenylolpropan und Epichlorhydrin mit einem Epoxidäquivalentgewicht von 1950 (®Beckopox EP 307, Hoechst AG) werden in der gleichen Menge Methoxypropanol gelöst, mit 80 Teilen der Harzlösung aus Beispiel 1.2 vermischt und anschließend 0,8 Teile einer Mischung aus 0,2 Teilen Ortho-Phosphorsäure und 0,6 Teilen Butylglykol zugegeben.

### Beispiel 2

### 2.1 Herstellung eines Novolaks

In einem Reaktionsgefäß, das mit Thermometer, Rührer, Rückflußkühler, absteigendem Kühler und einer Einrichtung zur Verminderung des Drucks versehen ist, werden 70 Teile Phenol, 0,4 Teile Maleinsäureanhydrid sowie 13,2 Teile 30%ige wäßrige Formaldehyd-Lösung 3 Stunden unter Rückfluß gekocht. Dann destilliert man die flüchtigen Anteile unter vermindertem Druck (60 mbar) und einer Sumpftemperatur von 220 °C ab. Im Reaktionsgefäß verbleiben 49,9 Teile eines Polymethylen-polyphenols mit einer Viskosität von 290 mPa·s (20 °C, 50%ig in Ethylenglykolmonoethylether).

In einem anderen, sonst gleich ausgestatteten Reaktor werden 309 Teile des aus 2.1 stammenden Polymethylenpolyphenols aufgeschmolzen, mit 399 Teilen 33%iger Natronlauge versetzt und zu der Schmelze bei 60 °C innerhalb einer Stunde 367,5 Teile Natriumchloracetat zugegeben. Man läßt noch 7 Stunden bei 60 °C nachreagieren, gibt 309 Teile Wasser sowie 200 Teile Aceton zu und stellt mit 645 Teilen 25 %iger Schwefelsäure pH 2,1 (23 °C) ein. Zu dem bei 60 °C temperierten Ansatz gibt man weitere 300 g Wasser und läßt die Unterlauge absitzen.

Nach Abtrennen der Unterlauge destilliert man bis zu einer Sumpftemperatur von 130 °C, zuletzt 1 Stunde bei einem Vakuum von 60 mbar, die flüchtigen Anteile ab. Man erhält 450 Teile eines hellen Festharzes mit einer Säurezahl von 289,9 bei einem Rückstand von 99,6 % (1 h / 135 °C). Die Viskosität beträgt 450 mPa·s (23 °C, 50 %ig in Methoxypropanol). Die OH-Zahl liegt bei 34 und die Verseifungszahl bei 311.

### 2.3.Herstellung und Prüfung der Lacke

60 Teile eines Epoxidharzes auf Basis von Diphenylolpropan und Epichlorhydrin mit einem Epoxidäquivalentgewicht von 1950 (Beckopox EP 307, Hoechst AG) werden in der gleichen Menge Methoxypropanol gelöst, mit 80 Teilen Harzlösung aus Beispiel 2.1 vermischt und anschließend 0,8 Teile einer Mischung aus 0,2 Teilen Ortho-Phosphorsäure und 0,6 Teilen Butylglykol zugegeben.

### 3. Lacktechnische Prüfungen (Lacke aus Beispiel 1 und Beispiel 2).

Als Vergleichsprodukt wird ein handelsübliches, nicht säuremodifiziertes Resol ®Phenodur PR 722, 53 %ig (Resolharz, Hoechst AG) herangezogen, die Formulierung zum fertigen Lack erfolgte analog den Vorschriften in 1.3 und 2.3;

**Tabelle 1**

| **Rezepturen** | | | |
|---|---|---|---|
| | **Lack Beispiel 1** | **Lack Beispiel 2** | **Lack Phenodur PR 722** |
| Harz aus Beispiel 1/51% | 80 | | |
| Harz aus Beispiel 2/51% | | 80 | |
| Phenodur PR 722/53% | | | 77 |
| Beckopox EP 307 | 60 | 60 | 60 |
| Methoxypropanol | 60 | 60 | 60 |
| H₃PO₄, 20% Butylglykol | 0,8 | 0,8 | 0,8 |
| | 200,8 | 200,8 | 197,9 |

Die Lacke werden mittels Spiralrakel derart auf handelsübliches, verzinntes Weißblech aufgetragen, daß nach dem Einbrennen eine mittlere Lackauflage von 5g/m² entsteht.
Eingebrannt werden die Lackfilme im Umluftofen bei 200°C für 12 Minuten. Die physikalischen Prüfungen erfolgen auf den erkalteten, lackierten Blechen.

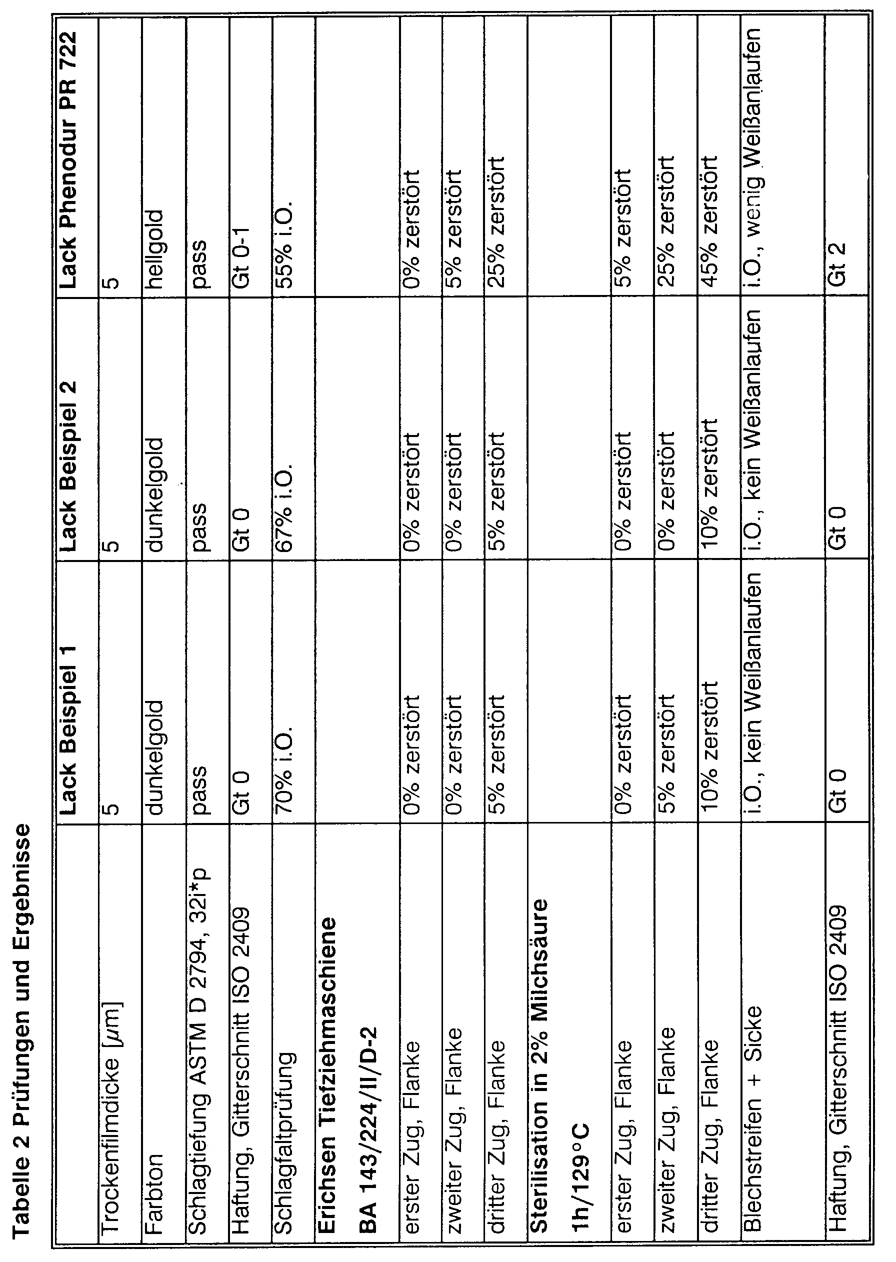

## Patentansprüche

1. Einbrennlack, enthaltend Epoxidharze sowie carboxyl-funktionelle Alkylidenpolyphenole in einer solchen Menge, daß die Carboxylgruppen im Vergleich zu den Epoxidgruppen der Epoxidharze mindestens in äquimolarer Menge vorliegen.

2. Einbrennlack nach Anspruch 1, dadurch gekennzeichnet, daß als carboxyl-funktionelle Alkylidenpolyphenole Umsetzungsprodukte von Alkylidenpolyphenolen mit Halogencarbonsäuren enthalten sind.

3. Einbrennlack nach Anspruch 1, dadurch gekennzeichnet, daß als carboxyl-funktionelle Alkylidenpolyphenole Umsetzungsprodukte von Alkylidenpolyphenolen mit olefinisch ungesättigten Dicarbonsäuren und/oder deren Anhydriden enthalten sind.

4. Einbrennlack nach Anspruch 1, dadruch gekennzeichnet, daß als carboxyl-funktionelle Alkylidenpolyphenole Umsetzungsprodukte von Alkylidenpolyphenolen, Harzsäuren und olefinisch ungesättigten Dicarbonsäuren und/oder deren Anhydride enthalten sind.

5. Einbrennlack nach Anspruch 1, dadurch gekennzeichnet, daß zusätzlich als Vernetzer Hexamethylentetramin, Melaminharze und/oder Phenolresole enthalten sind.

6. Verfahren zur Herstellung von Einbrennlacken nach Anspruch 1, dadurch gekennzeichnet, daß zunächst Epoxidharz und carboxyl-funktionelles Alkylidenpolyphenol sowie gegebenenfalls übliche Zusatzstoffe gemischt werden und anschließend mit einem Säurekatalysator versetzt werden.

7. Verfahren nach Anspruch 6, dadurch gekennzeichnet, daß das Gewichtsverhältnis von Epoxidharz zu carboxyl-funktionellem Alkylidenpolyphenol 8,5 : 1 bis 1 : 4 beträgt.

8. Verfahren nach Anspruch 6, dadurch gekennzeichnet, daß als Säurekatalysator Phosphorsäure eingesetzt wird.

9. Verwendung des Einbrennlacks nach Anspruch 1 zum Beschichten von Lebensmittelbehältern.

10. Verwendung des Einbrennlacks nach Anspruch 1 zum Beschichten der Innenseiten von Metallbehältern.

11. Eingebrannter, unter Verwendung des Einbrennlacks gemäß Anspruch 1 erhaltener Emballagen-Lackfilm, der im wesentlichen frei von Epoxidgruppen tragenden migrationsfähigen Bestandteilen ist.
